# EUROPEAN PATENT SPECIFICATION

(11) **EP 2 244 356 B1**
(45) Date of publication and mention of the grant of the patent: **24.07.2019**
(21) Application number: 10160760.4
(22) Date of filing: 22.04.2010
(51) Int. Cl.: H02K 3/12, B60K 6/48, H02K 15/04, H02K 3/24

(54) **Rotating electric machine for driving a vehicle and vehicle equipped with the same**
Elektrische rotierende Maschine zum Antreiben eines Fahrzeugs und ein damit ausgestattetes Fahrzeug
Machine électrique rotative pour entraîner un véhicule et véhicule équipé de celle-ci

(30) Priority: 24.04.2009 JP 2009105800
(43) Date of publication of application: 27.10.2010
(73) Proprietor: Hitachi Automotive Systems, Ltd., Hitachinaka-shi Ibaraki 312-8503 (JP)
(72) Inventor: Nakayama, Kenichi, Ibaraki 312-8503 (JP); Yamamura, Satoshi, Ibaraki 312-8503 (JP); Goto, Tsuyoshi, Ibaraki 312-8503 (JP); Saito, Yasuyuki, Ibaraki 312-8503 (JP); Kaimori, Tomoaki, Ibaraki 312-8503 (JP)
(74) Representative: MERH-IP Matias Erny Reichl Hoffmann Patentanwälte PartG mbB

(56) References cited:
- EP-A1- 0 881 752
- EP-A1- 1 542 336
- EP-A2- 0 917 164
- EP-A2- 1 330 012
- DE-A1- 2 135 579
- DE-A1-102006 033 179
- DE-A1-102006 049 420

## Description

The present invention relates to a rotating electric machine for driving a vehicle and a vehicle driven by the rotating electric machine.

As a measure against recent global warming, development of vehicles using a rotating electric machine as a vehicle driving source has been promoted. There are front-wheel drive vehicles, rear-wheel drive vehicles, and four-wheel drive vehicles using main power from a rotating electric machine alone or from an engine and a rotating electric machine as a vehicle driving source. In such vehicles, the rotating electric machine is mechanically connected to the engine and a transmission, and the rotating electric machine is often fitted between the engine and the transmission or inside the transmission.

Such a rotating electric machine for driving a vehicle is expected to be small in size and high in output. Japanese Laid Open Patent Publication No. H11 - 075334 discloses a rotating electric machine that includes a stator core having a multitude of slots which open inwardly, in which a plurality of generally U-shaped segment conductors are inserted into each of the slots.

In EP 1 542 336 A1, a vehicle motor is described. The motor has a stator coil as well as a cooling oil discharge outlet provided in an upper portion of the motor.

In DE 10 2006 049 420 A1, an electric machine is described having electric wires having a trapezoidal cross section. The wires are provided for a stator of the electric machine.

In EP 1 330 012 A2, a stator of a rotary electric machine is described. To secure insulation between electric conductors at a coil end, a first electrical conductor at one coil end is arranged so as to intersect a radially adjacent second electrical conductor at one point or more. The electrical conductor is formed with radial indentations in side faces that are opposite side faces in opposing electrical conductors at any of the intersecting portions.

In EP 0 881 752 A1, an alternator for an automotive vehicle is described. The alternator comprises a rotor core, a stator with toothed portions spaced by slots. U-shaped conductor segments are installed in the slots. One portion of the conductor is accommodated in outer layer portion of a predetermined slot while the other portion is accommodated in an inner layer portion of the slot phase shifted by an electric angle.

In DE 2 135 579 A1, isolations for wires of electrical machines are described.

In EP 0 917 164 A2, multi parallel conductor for windings of electrical devices are described. The conductor consists of a number of electrically insulated conductors arranged in at least two adjacent stacks crimped so that along the length of the conductor, the stacks exchange places.

In DE 10 2006 033 179 A1, an electrical machine is described. The machine has a rotor and stator. The rotor is arranged in a housing which is designed as three-piece with a housing shell and two front-sided bearing shields. The stator is fastened radially to the housing shell through a press-fit.

Since the rotating electric machine for driving a vehicle is expected to be small in size and high in output, heat needs to be dissipated from the stator quickly. However, since the above conventional technology adopts a method in which the generally U-shaped segment conductors are inserted into each of the slots, it has a problem that heat dissipation properties are reduced as the height the coil end in an axial direction is reduced, for example.

The present invention is to provide a rotating electric machine for driving a vehicle that has good cooling properties. In addition, the present invention is to provide a vehicle that includes a compact powertrain using the rotating electric machine that is small in size and high in output and has good heat dissipation properties.
To solve the problems the features of the independent claim are suggested. Preferred developments are in the dependent claims.

A rotating electric machine for driving a vehicle according to a first aspect comprises: a stator that comprises a stator core in which a plurality of slots extending in a direction of a rotation axis are arranged circumferentially and a stator

coil inserted into the slots; and/or a rotor that is rotatably provided in the stator through a gap, wherein: the stator coil is constituted with conducting wires, and a cross section of a protruding portion of each of the conducting wires that protrudes from the slots in a coil end portion of the stator coil is formed into a substantially trapezoidal shape.
The rotating electric machine for driving a vehicle according to the first aspect may further comprise an outlet port for refrigerant that is provided in such a position that the refrigerant discharged from the outlet port contacts with the protruding portions.

According to a third aspect, the rotating electric machine for driving a vehicle according to the first aspect may further comprise an insulating paper that is inserted into each of the slots, with the insulating paper including an overlap section.

According to a fourth aspect, in the rotating electric machine for driving a vehicle according to the first aspect, the conducting wires may be rectangular wires, and the cross section of the protruding portion may be formed into a substantially trapezoidal shape by using a die.

According to a fifth aspect of the present invention, in the rotating electric machine for driving a vehicle according to the first aspect, the stator may be held by a housing that is formed cylindrically by pressing.

### BRIEF DESCRIPTION OF THE DRAWINGS

FIG. 1 is a sectional view showing the overall structure of a rotating electric machine system that includes the rotating electric machine according to an embodiment of the present invention.
FIG. 2 is a perspective view showing the structure of the rotating electric machine according to an embodiment of the present invention.
FIGS. 3A and 3B are perspective views of coil end portions of the rotating electric machine according to an embodiment of the present invention.
FIGS. 4A, 4B, and 4C are sectional perspective views and sectional views of the coil end portions of the rotating electric machine according to an embodiment of the present invention.
FIG. 5 is a sectional view of the coil end portion having B-shaped insulators of the rotating electric machine according to an embodiment of the present invention.
FIGS. 6A and 6B illustrate a forming method of a generally trapezoidal shaped coil of the rotating electric machine according to an embodiment of the present invention.
FIG. 7 is a block diagram showing the first structure of a vehicle on which the rotating electric machine according to an embodiment of the present invention is mounted.
FIG. 8 is a block diagram showing the second structure of a vehicle on which the rotating electric machine according to an embodiment of the present invention is mounted.
FIG. 9 is a block diagram showing the first layout example of the engine, the rotating electric machine, and the transmission in a hybrid vehicle on which the rotating electric machine according to an embodiment of the present invention is mounted.
FIG. 10 is a block diagram showing the second layout example of the engine, the rotating electric machine, and the transmission in a hybrid vehicle on which the rotating electric machine according to an embodiment of the present invention is mounted.

### DESCRIPTION OF PREFERRED EMBODIMENTS

A rotating electric machine according to an embodiment of the present invention will be explained now.

The rotating electric machine explained in the present embodiment is appropriate for a vehicle driving motor and, although it is small in size and high in output, it has good cooling properties. In addition, since conductors with generally rectangular shaped cross sections can be used and the space factor in slots can be improved, the rotating electric machine becomes more efficient.

In conventional rotating electric machines, conductors with generally rectangular shaped cross sections are used so as to downsize the rotating electric machines. However, there was a problem that heat dissipation properties were reduced as the axial height of the coil end portion with the largest amount of heat was reduced, thereby resulting in low cooling efficiency of the rotating electric machine.

The rotating electric machine according to the present embodiment is arranged to form part of cross sections of conducting wires which form coil end portions to be a generally trapezoidal shape. By this manner, heat from the stator of the rotating electric machine is quickly dissipated without increasing the conventional coil end height, thereby improving the cooling performance of the rotating electric machine.

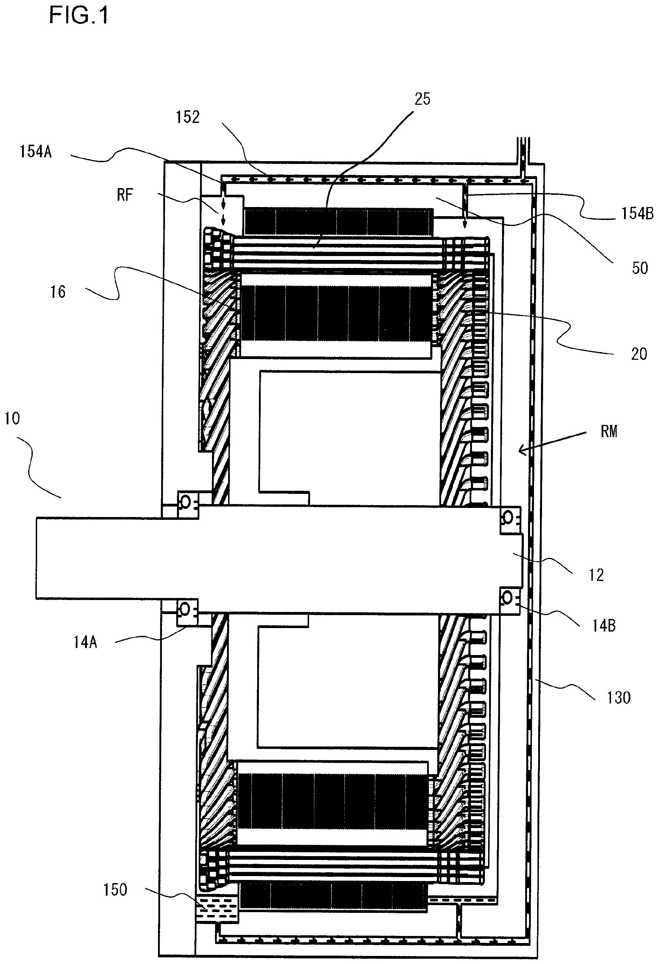

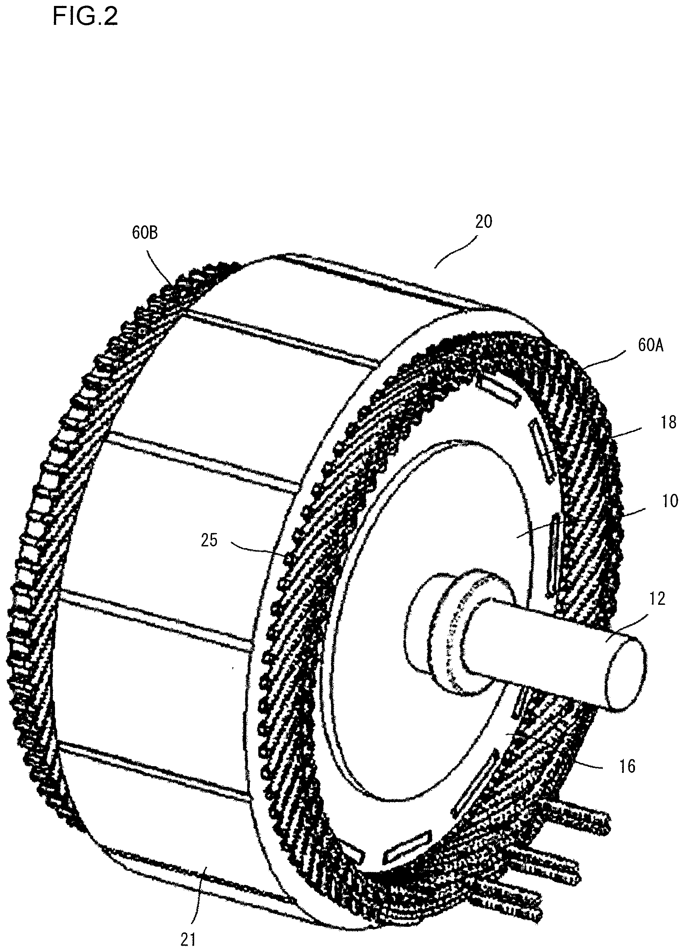

The structure of the rotating electric machine according to an embodiment of the present invention will be explained now in reference to FIG. 1 and FIG. 2.

FIG. 1 is a sectional view showing the overall structure of a rotating electric machine system that includes the rotating electric machine according to an embodiment of the present invention. The rotating electric machine RM explained in the present embodiment is for hybrid vehicles. The rotating electric machine RM is mounted between an engine and a transmission or in the transmission. The rotating electric machine RM is required to be small in size and high in output. Therefore, increase in temperature is an issue, and it is necessary to quickly dissipate the heat having been generated at a stator core or the coil of the rotating electric machine RM, which is used as the main power of the vehicle.

The rotating electric machine RM is covered with a case 130. In the event that the rotating electric machine RM is disposed between the engine and the transmission, the case 130 is made up of the case of the engine and/or the case of the transmission. In the event that the rotating electric machine RM is mounted in the transmission, the case 130 is made up of the case of the transmission.

The rotating electric machine RM, which is a three-phase synchronous motor with a built-in permanent magnet, acts as an electric machine when high (for instance, 400A) three-phase alternating current is supplied to the stator coil. When the rotating electric machine RM is driven by the engine, it acts as a power generator and outputs three-phase alternating current. In the event that the rotating electric machine RM acts as a power generator, the current output from the stator coil is less than that in the event that it acts as an electric machine (for example, 100A). The rotating electric machine RM presented in the embodiment is a flat rotating electric machine with thickness in the direction of the rotation axis being less than the outside diameter.

The rotating electric machine RM includes a rotor 10, a stator 20 and a housing 50. The rotor 10 is disposed inwardly in the stator 20 through a gap. The rotor 10 is fixed to a shaft 12. Both ends of the shaft 12 are rotatably supported by bearings 14A and 14B. The housing 50 is cylindrically formed, for example, by pressing, and the stator 20 is held by the housing 50. In other words, the outer circumference of the stator 20 is fixed to the inner circumference of the housing 50. The outer circumference of the housing 50 is fixed inwardly in the case 130.

A sump 150 of the refrigerant RF is formed at the bottom section (in the vertical direction when the rotating electric machine system is mounted on the vehicle) of the case 130. As the refrigerant RF, for instance, insulating oil is used. Part of the stator 20, which is shown as a lower part in FIG. 1, is partially immersed in the refrigerant RF that has collected in the sump 150. A pump (not figured) sucks the refrigerant RF that has collected in the sump 150 and discharges it from refrigerant outlets 154A and 154B, which are formed in the upper part of the case 130 as shown in FIG. 1, through a refrigerant path 152. The refrigerant outlets 154A and 154B are provided above both ends of a stator coil, that is, coil end portions, of the stator 20. In addition, a multiple of the refrigerant outlets 154A and 154B are arranged in the case 130 in a circumferential direction of the stator 20.

Having been discharged from the refrigerant outlets 154A and 154B, the refrigerant RF is squirted directly on a coil end portion 60 (constituted with coil end portions 60A and 60B shown in FIG. 2) at the both ends of the stator coil so as to cool the coil end portion 60 of the stator coil. Having drawn heat away from the stator 20, the refrigerant RF collects in the bottom part of the case 130, is caused by the pump to forcibly flow through the refrigerant path 152 and to circulate, is discharged from the refrigerant outlets 154A and 154B again, and then cools the stator 20.

As shown in FIG. 2, the rotating electric machine RM includes the rotor 10 and the stator 20.

The rotor 10 includes a rotor core 16 and permanent magnets 18, which are inserted into holes formed in the rotor core 16. The permanent magnet 18 may assume not one magnet per one pole but the one divided into a plurality of them.

U-phase, V-phase, W-phase stator coils are each formed in distributed winding in a stator core 21 of the stator 20.

Since the rotating electric machine RM is mounted between the engine and the transmission or in the transmission, the rotating electric machine RM is required to be small in size and high in output. Therefore, increase in temperature is an issue, and it is necessary to quickly dissipate the heat having been generated at the stator core 21 or the coil of the rotating electric machine RM, which is used as the main power of the vehicle.

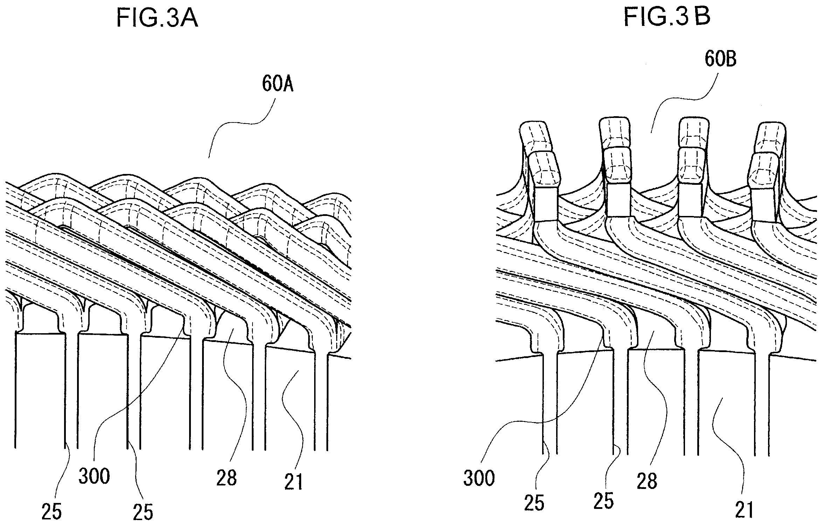

As shown in FIGS. 3A and 3B, in the coil end portions 60A and 60B, protruding parts of conducting wires that protrude from slots 25 provided in the stator core 21 have a cross section formed into a substantially trapezoidal shape 300. As a result, the area on which the stator core 21 and the coil contact with the refrigerant RF increases, thereby improving heat dissipation properties of the heat generated at the stator core 21 and the coil.

Here, the substantially trapezoidal shape 300 is a quadrilateral with a pair of generally parallel sides facing each other after coil-forming a rectangular conducting wires, designating the generally parallel two opposite sides as an upper base and a lower base, respectively. For instance, the substantially trapezoidal shape 300 includes an isosceles trapezoid.

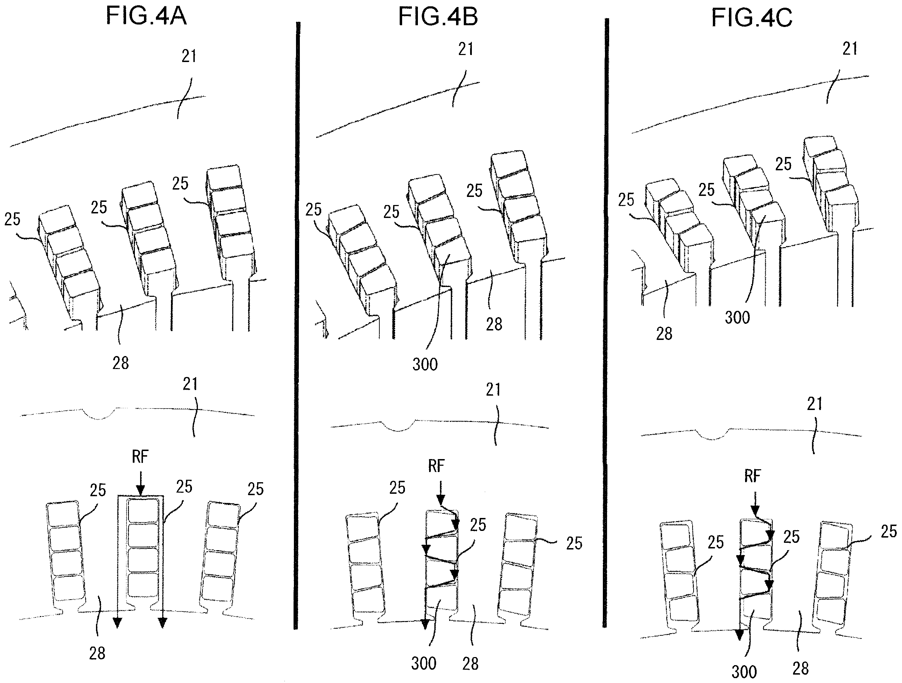

FIG. 4A shows a sectional perspective view and a sectional view of the coil end portion in the event that the conducting wire cross section does not assume a substantially trapezoidal shape, as a comparison example. FIG. 4B shows a sectional perspective view and a sectional view of the coil end portion in the event that the conducting wire cross section assumes a substantially trapezoidal shape. FIG. 4C shows a sectional perspective view and a sectional view of the coil end portion prepared by forming the conducting wire cross section into the substantially trapezoidal shape and by alternately offsetting conducting wires in the direction of rotation of the rotating electric machine.

In the case of the comparison example shown in FIG. 4A, the refrigerant RF flows through a gap 28 as shown by arrows to cool the coil. However, in this case, the area on which each of the conducting wires of the coil and the refrigerant RF contact is small and thus, heat is not transferred effectively. In the case of the structures shown in FIGS. 4B and 4C, the area on which the refrigerant RF and each of the conducting wires of the coil contact increases as shown by arrows, and therefore the heat generated at the coil can be conducted effectively, thereby improving the cooling efficiency. Here, as shown in FIG. 1 the outlet ports, that is, the refrigerant outlets 154A and 154B, of the refrigerant RF are provided in the position such that the refrigerant RF contacts with the protruding parts of the coil that constitutes the coil end portions 60A and 60B.

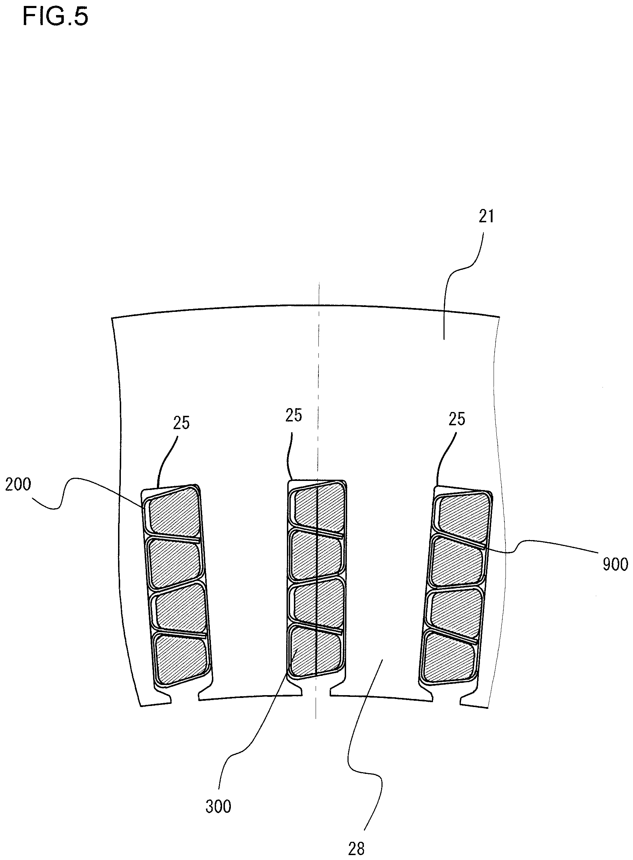

As shown in FIG. 5, an insulator 200 is provided as it is sandwiched between two adjacent conducting wires in the same slot 25. The insulator 200 goes around a conducting wire which is arranged radially inward (at a lower side of FIG. 5) from a pinch portion 900 between two adjacent conducting wires, and goes around a conducting wire which is arranged radially outward (at an upper side of FIG. 5) in the same direction as a section that goes around the conducting wire of the lower side. One end section of the insulator 200 is fixed as it is sandwiched between one side of the insulator 200 and the conducting wire of the lower side at the pinch portion 900. The other end section of the insulator 200 is fixed as it is sandwiched between the other side of the insulator 200 and the conducting wire of the upper side at the pinch portion 900. The insulator 200 is, for instance, an insulating paper. At the pinch portion 900, an overlap section, on which a part of an insulating paper that goes around the conducting wire of the lower side and a part of an insulating paper that goes around the conducting wire of the upper side overlap, is formed. As described above, the configuration in which the conducting wire cross section is formed into the generally trapezoidal shape and each of the conducting wires is alternately offset in the direction of rotation of the rotating electric machine improves the reliability between each of the conducting wires of the coil and further improves the cooling properties even if, in particular as recent rotating electric machines for driving vehicles, working voltage over 100V, even as high as 400V or 600V, is applied.

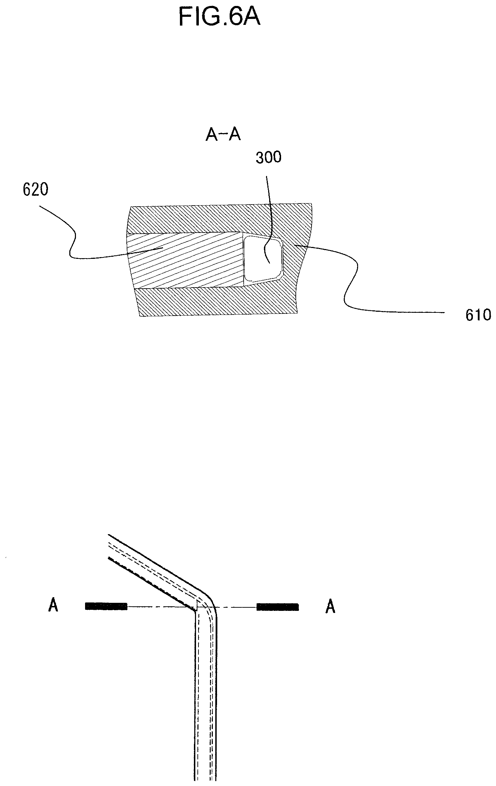

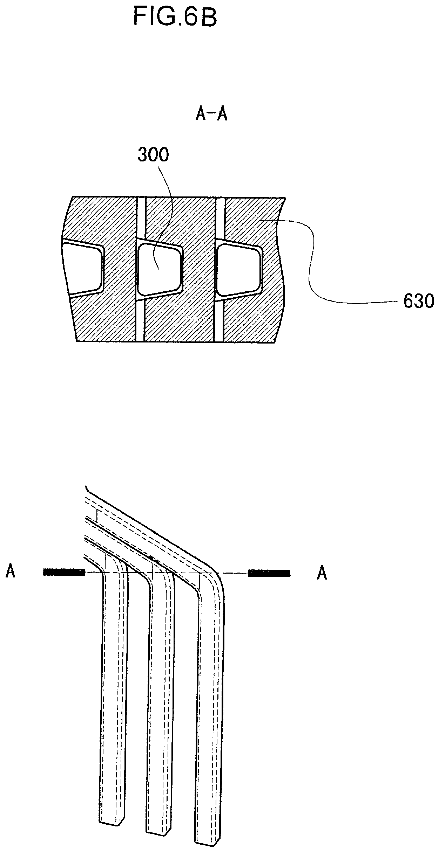

FIGS. 6A and 6B present a method to form a cross section of the conducting wire into the generally trapezoidal shape.

FIG. 6A illustrates the method in which a single conducting wire is formed into the generally trapezoidal shape. The conducting wire is sandwiched by a recessed die 610 and a protruding die 620, and the cross section of the conducting wire is formed into the generally trapezoidal shape, conforming to the dies. The conducting wire is thus formed into the generally trapezoidal shape 300 and then inserted into the stator core 21.

FIG. 6B illustrates the method in which a plurality of conducting wires are formed into the generally trapezoidal shape. The plurality of conducting wires are sandwiched by recessed dies 630 and the cross section of each of the conducting wires is formed into the generally trapezoidal shape to conform with the shape of the die. The conducting wires which have been formed into the substantially trapezoidal shape 300 are then inserted into the stator core 21. With these dies, each of the conducting wires constituting the coil can be formed into the generally trapezoidal shape with high reproducibility.

Having been discharged from the refrigerant outlets 154A and 154B, the refrigerant RF is squirted directly on the coil end portions 60A and 60B of the stator coil through the gaps 28. The portions of the conducting wires protruding from the slots 25 of the stator core 21 are formed in the substantially trapezoidal shape 300 so as to increase the area on which the coil and the refrigerant RF contact and improve the cooling performance.

In a varnish application process for the stator 20, varnish is applied to the coil end portions 60A and 60B of the coil. The parts of the conducting wires protruding from the slots 25 are formed into the generally trapezoidal shape 300 so that the surface area of the coil increases to increase the amount of the applied varnish. As a result, the cooling efficiency to the heat from the stator 20 is improved and an increase in temperature of the stator 20 is reduced.

As explained above, in the present embodiment, the heat having been generated at the stator coil is transferred to the stator core 21 through the varnish. Since heat is more likely to be transferred through varnish layers than through air layers, the cooling efficiency of the stator 20 becomes high. In this manner, an increase in temperature is low even if the rotating electric machine is downsized, and thus the long-life rotating electric machine without performance degradation is achieved. In addition, since the amount of varnish applied to the coil can be increased, dielectric strength can be improved.

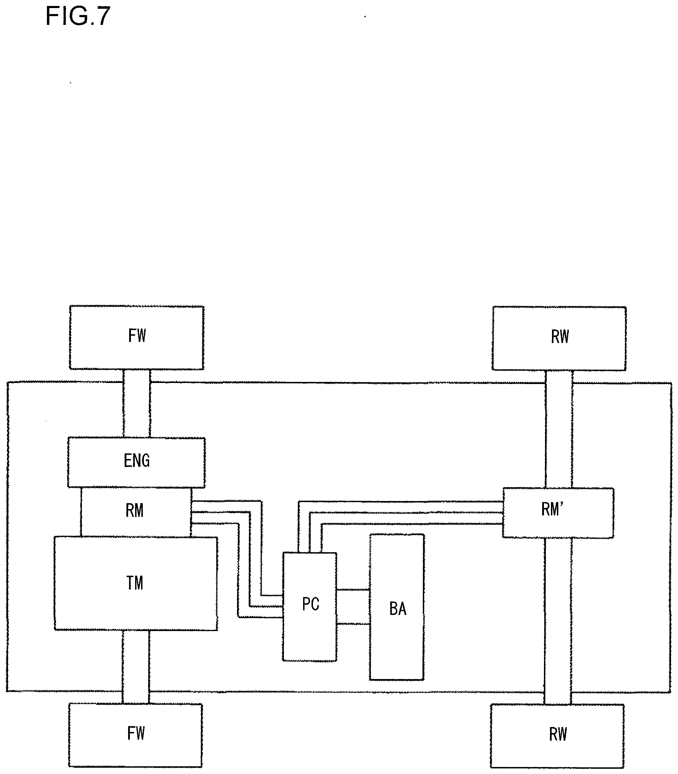

The first structure of the vehicle on which the rotating electric machine according to the present embodiment is mounted will now be explained in reference to FIG. 7. FIG. 7 presents the powertrain of a hybrid vehicle assuming a four-wheel drive.

As the main power of the front wheel side, an engine ENG and the rotating electric machine RM are provided. The power having been generated by the engine ENG and the rotating electric machine RM is shifted by a transmission TM and is transmitted to front driving wheels FW. With respect to the drive of the rear wheels, a rotating electric machine RM' disposed on the rear wheel side and rear driving wheels RW are mechanically connected and the power is transmitted thereto.

The rotating electric machine RM performs the startup of the engine ENG and, depending on the driving state of the vehicle, switches generation of driving force and generation of power for recovering the energy as electrical energy while the vehicle is decelerating. Drive and generator operation of the rotating electric machine RM are controlled by a power converter PC so as to optimize torque and rotational speed according to the driving state of the vehicle. The power required to drive the rotating electric machine RM is supplied from a battery BA through the power converter PC. In addition, when the rotating electric machine RM is engaged in generator operation, electrical energy is charged in the battery BA through the power converter PC.

Here, the rotating electric machine RM, which is the power source of the front wheel side, is disposed between the engine ENG and the transmission TM and employs the structure explained in FIG. 1 to FIG. 6. The rotating electric machine RM', which is the power source of the rear wheel side, may assume the same rotating electric machine or may assume another rotating electric machine with a general structure.

It is to be noted that in the structure in FIG. 7 the structure of front-wheel drive hybrid vehicle is achieved by not mounting the rotating electric machine RM' on the rear-wheel drive side and by not designating the rear wheels as driving wheels.

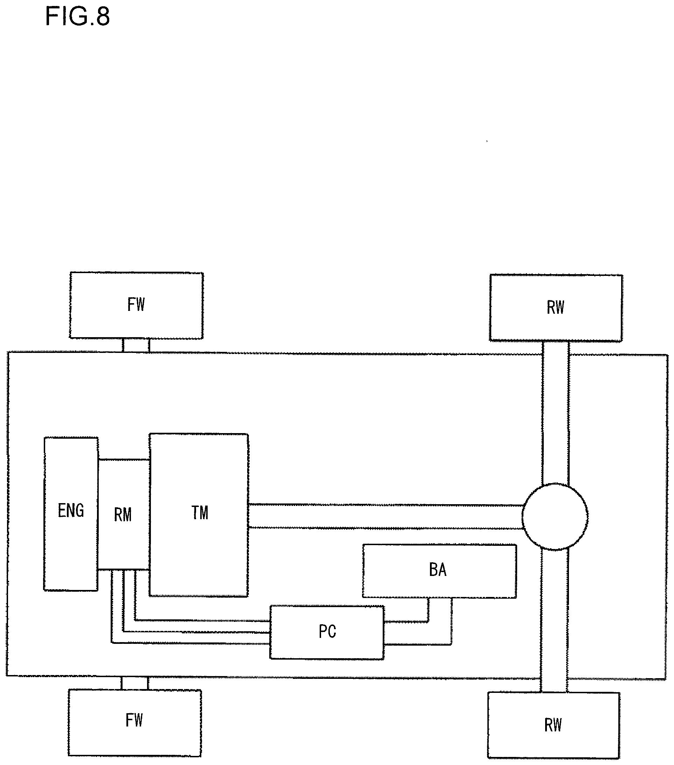

FIG. 8 presents the powertrain of a hybrid vehicle assuming a rear-wheel drive.

As the main power, the engine ENG and the rotating electric machine RM are provided on the front wheel side, and the power having been generated by the engine ENG and the rotating electric machine RM is shifted by the transmission TM and is transmitted to the rear driving wheels RW.

The rotating electric machine RM performs the startup of the engine ENG and, depending on the driving state of the vehicle, switches generation of driving force and generation of power for recovering the energy as electrical energy while the vehicle is decelerating. Drive and generator operation of the rotating electric machine RM are controlled by the power converter PC so as to optimize torque and rotational speed according to the driving state of the vehicle. The power required to drive the rotating electric machine RM is supplied from the battery BA through the power converter PC. In addition, when the rotating electric machine RM is engaged in generator operation, electrical energy is charged in the battery BA through the power converter PC.

Here, the rotating electric machine RM, which is the power source of the rear wheel side, is disposed between the engine ENG and the transmission TM and employs the structure explained in FIG. 1 to FIG. 6.

In addition, the structure of four-wheel drive vehicles is achieved by adding to the powertrain shown in FIG. 8 a mechanism for transmitting power from an output section of the transmission to the front wheel side as in common vehicles.

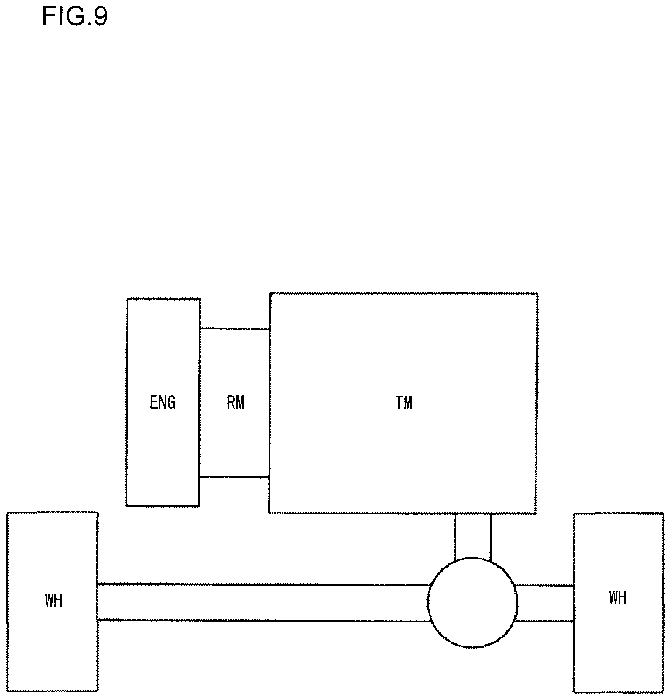

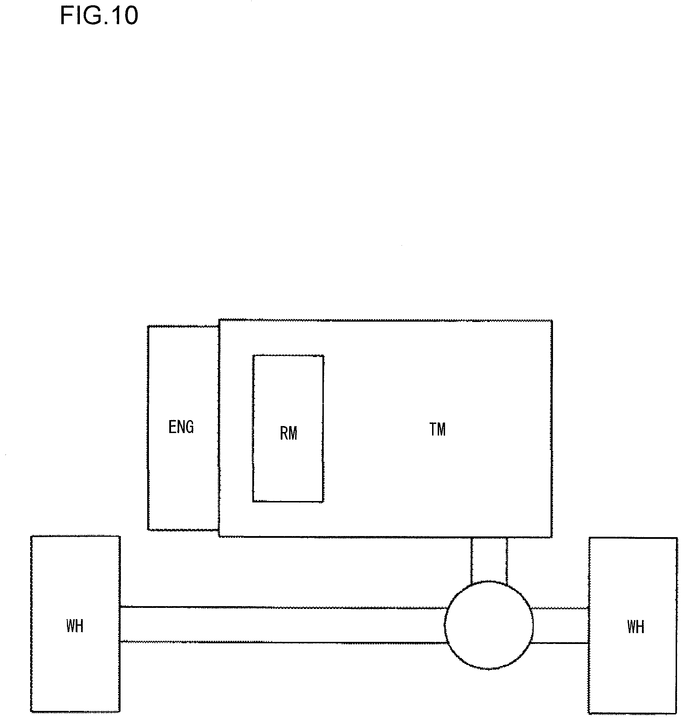

Next, the layout of the engine ENG, the rotating electric machine RM, and the transmission TM in a hybrid vehicle on which the rotating electric machine according to the present embodiment is mounted will now be explained in reference to FIG. 9 and FIG. 10.

FIG. 9 is a block diagram showing the first layout example of the engine ENG, the rotating electric machine RM, and the transmission TM in a hybrid vehicle on which the rotating electric machine according to an embodiment of the present invention is mounted. FIG. 10 is a block diagram showing the second layout example of the engine ENG, the rotating electric machine RM, and the transmission TM in a hybrid vehicle on which the rotating electric machine according to an embodiment of the present invention is mounted.

The layouts of the engine ENG, the rotating electric machine RM, and the transmission TM in a hybrid vehicle are divided into two main types.

The first structure includes, as shown in FIG. 9, the engine ENG, the rotating electric machine RM, and the transmission TM each being independently configured and the rotating electric machine RM being mechanically connected between the engine ENG and the transmission TM, thereby transmitting outputs of the transmission TM to driving wheels WH.

The second structure includes, as shown in FIG. 10, the engine ENG and the transmission TM being independently configured and mechanically connected, the rotating electric machine RM being mounted inside the transmission TM, and the transmission TM and the rotating electric machine RM being mechanically connected. Output of the transmission TM are transmitted to the driving wheels WH.

In the above structure, the rotating electric machine RM, which is the power source of the driving wheels WH, employs the structure explained in FIG. 1 to FIG. 6.

As explained above, the rotating electric machine that has good cooling properties can be provided according to an embodiment of the present invention. In addition, the vehicle which includes the compact powertrain that uses the rotating electric machine that is small in size and high in output and has good heat dissipation properties can be provided.

## Claims

1. A rotating electric machine for driving a vehicle comprising:
a stator (20) that comprises a stator core (21) in which a plurality of slots (25) extending in a direction of a rotation axis are arranged circumferentially and a stator coil inserted into the slots (25); and
a rotor (10) that is rotatably provided in the stator (20) through a gap, **characterized in that**:
the stator coil is constituted with conducting wires, and a cross section of a protruding portion of each of the conducting wires that protrudes from the slots (25) in a coil end portion (60A, 60B) of the stator coil is formed into a substantially trapezoidal shape (300) wherein the conducting wires are alternately offset in the direction of rotation of the rotating electric machine; and further comprising
an outlet port (154A, 154B) for refrigerant, RF, that is provided in such a position that the refrigerant ,RF, discharged from the outlet port (154A, 154B) contacts with the protruding portions.

2. A rotating electric machine for driving a vehicle according to claim 1, further comprising:
an insulating paper (200) that is inserted into each of the slots (25), with the insulating paper (200) including an overlap section (900).

3. A rotating electric machine for driving a vehicle according to at least one of claims 1 to 2, wherein:
the conducting wires are rectangular wires, and the cross section of the protruding portion is configured to be formed into a substantially trapezoidal shape (300) by using a die (610, 620; 630).

4. A rotating electric machine for driving a vehicle according to at least one of claims 1 to 3, wherein:
the stator (25) is held by a housing (50) that is formed cylindrically by pressing.

## Patentansprüche

1. Rotierende elektrische Maschine zum Fahren eines Fahrzeugs, die Folgendes umfasst:
einen Stator (20), der einen Statorkern (21), in dem mehrere Schlitze (25), die sich in Richtung einer Rotationsachse erstrecken, in Umfangsrichtung angeordnet sind, und eine Statorspule, die in die Schlitze (25) eingefügt ist, enthält; und
einen Rotor (10), der in dem Stator (20) durch eine Lücke drehbar vorgesehen ist, **dadurch gekennzeichnet, dass**:
die Statorspule aus leitenden Drähten besteht und ein Querschnitt eines vorstehenden Teils jedes der leitenden Drähte, der von den Schlitzen (25) in einem Spulenendteil (60A, 60B) der Statorspule vorsteht, in einer im Wesentlichen trapezförmigen Form (300) gebildet ist, wobei die leitenden Drähte in Richtung der Drehung der rotierenden elektrischen Maschine abwechselnd versetzt sind; und die ferner umfasst:
eine Auslassöffnung (154A, 154B) für Kühlmittel, RF, die in einer derartigen Position vorgesehen ist, dass das Kühlmittel, RF, das aus der Auslassöffnung (154A, 154B) ausgestoßen wird, die vorstehenden Teile berührt.

2. Rotierende elektrische Maschine zum Fahren eines Fahrzeugs nach Anspruch 1, die ferner umfasst:
ein Isolierpapier (200), das in jeden der Schlitze (25) eingefügt ist, wobei das Isolierpapier (200) einen Überdeckungsabschnitt (900) enthält.

3. Rotierende elektrische Maschine zum Fahren eines Fahrzeugs nach mindestens einem der Ansprüche 1 bis 2, wobei:
die leitenden Drähte rechteckige Drähte sind und der Querschnitt des vorstehenden Teils so konfiguriert ist, dass er unter Verwendung eines Würfels (610, 620; 630) in einer im Wesentlichen trapezförmigen Form (300) gebildet ist.

4. Rotierende elektrische Maschine zum Fahren eines Fahrzeugs nach mindestens einem der Ansprüche 1 bis 3, wobei:
der Stator (25) durch ein Gehäuse (50) gehalten wird, das durch Stanzen zylindrisch geformt ist.

## Revendications

1. Machine électrique rotative pour entraîner un véhicule, comprenant :
un stator (20) qui comprend un noyau de stator (21) dans lequel une pluralité de fentes (25) s'étendant dans une direction d'un axe de rotation sont agencées de manière circonférentielle, et une bobine de stator insérée dans les fentes (25) ; et
un rotor (10) qui est prévu avec faculté de rotation dans le stator (20) via un intervalle,
**caractérisée en ce que**
la bobine de stator est constituée avec des fils conducteurs, et une section transversale d'une portion en projection de chacun des fils conducteurs qui se projette depuis les fentes (25) dans une portion terminale (60A, 60B) de la bobine de stator est formée sous une forme sensiblement trapézoïdale (300) dans laquelle les fils conducteurs sont alternativement décalés dans la direction de rotation de la machine électrique rotative ; et comprend en outre un orifice de sortie (154A, 154B) pour un réfrigérant RF qui est prévu à une position telle que le réfrigérant RF déchargé depuis l'orifice de sortie (154A, 154B) vient en contact avec les portions en projection.

2. Machine électrique rotative pour entraîner un véhicule selon la revendication 1, comprenant en outre :
un papier isolant (200) qui est inséré dans chacune des fentes (25), le papier isolant (200) incluant une section en chevauchement (900).

3. Machine électrique rotative pour entraîner un véhicule selon l'une au moins des revendications 1 et 2, dans laquelle :
les fils conducteurs sont des fils rectangulaires, et la section transversale de la portion en projection est configurée avec une forme sensiblement trapézoïdale (300) en utilisant une matrice (610, 620, 630).

4. Machine électrique rotative pour entraîner un véhicule selon l'une au moins des revendications 1 à 3, dans laquelle :
le stator (25) est maintenu par un boîtier (50) qui est formé de manière cylindrique par pressage.
